(19) **Europäisches Patentamt**
**European Patent Office**
**Office européen des brevets**

(11) **EP 3 186 908 B1**

(12) **EUROPEAN PATENT SPECIFICATION**

(45) Date of publication and mention of the grant of the patent:
**10.10.2018 Bulletin 2018/41**

(21) Application number: **14777400.4**

(22) Date of filing: **25.08.2014**

(51) Int Cl.:
**H04L 5/00** (2006.01)

(86) International application number:
**PCT/SE2014/050964**

(87) International publication number:
**WO 2016/032372 (03.03.2016 Gazette 2016/09)**

(54) **SUBCARRIER ALLOCATION DEVICE AND METHOD FOR ALLOCATING N CHANNELS TO CARRIER FREQUENCIES**

UNTERTRÄGERZUWEISUNGSVORRICHTUNG UND VERFAHREN ZUR ZUWEISUNG VON N-KANÄLEN ZU TRÄGERFREQUENZEN

DISPOSITIF D'ALLOCATION DE SOUS-PORTEUSE ET PROCÉDÉ D'ALLOCATION DE N CANAUX À DES FRÉQUENCES PORTEUSES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.07.2017 Bulletin 2017/27**

(73) Proprietor: **Telefonaktiebolaget LM Ericsson (publ)**
**164 83 Stockholm (SE)**

(72) Inventors:
• **LADVÁNSZKY, János**
**H-2013 Pomaz (HU)**

• **DORTSCHY, Boris**
**SE-129 31 Hägersten (SE)**

(74) Representative: **Ericsson**
**Patent Development**
**Torshamnsgatan 21-23**
**164 80 Stockholm (SE)**

(56) References cited:
**GB-A- 2 501 159    US-B1- 6 940 624**

• **SINGH AND BANSAL: "Suppression of FWM Crosstalk on WDM Systems Using Unequally Spaced Channel Algorithms-A Survey", 2013, IJARCSSE, 31 December 2013 (2013-12-31), XP055182415,**

**Description**

<u>Technical field</u>

The present disclosure relates to optical communication and in particular to allocation to and modulation of channels to optical carrier frequencies.

<u>Background</u>

In optical communication, a laser photodiode may be used in order to generate pulses of lights.

The laser-photodiode pair that is commonly used for optical communications, as well as any non-linear signal processing device, generates harmonics of the input frequencies and intermodulation components. These unwanted components from arbitrary channels may disturb communications in other channels. Careful allocation of the channels eliminates these secondary effects.

All nonlinear blocks in a communication channels generate harmonics and intermodulation. Some of them are located outside other channels, but others are located inside other channels. Thus communications in other channels may be disturbed. Therefore it is an old problem to suppress or mitigate harmonics and intermodulation in other channels. From among intermodulation products, third order intermodulation is most dangerous, because it is nearest to the useful signals in frequency scale and because from among intermodulation products, it has a significant amplitude.

In order to suppress harmonics and intermodulation, a possible solution is allocation of channels far away from the others in frequency, but this solution degrades the efficient exploitation of the useful bandwidth. Alternatively, a receiver of a signal may need to make use of resource demanding algorithms in order to possibly alleviate the effect of the harmonics and intermodulation. However, the effect of harmonics and intermodulation may not be totally compensated for and the algorithms may require a relatively large amount of resources of the receiver or transmitter. GB 2 501 159 A relates to a system where sub-carrier frequencies are allocated such that harmonic interference is minimized.

Summary

The object is to obviate at least some of the problems outlined. The invention is defined by the appended claims. The embodiments that do not fully fall under the scope of the claims have to be interpreted as examples useful for understanding the invention.

The subcarrier allocation device and the method performed by the subcarrier allocation device may have several advantages. One possible advantage is that the quality of the respective channel may be improved since they need not suffer from the impairments of first order harmonics and second and third order intermodulation caused by the other channel(s) being allocated subcarriers along the total bandwidth. Another possible advantage is that no additional hardware, or signal processing means, is needed to correct, or compensate for, the impairments of first order harmonics and second and third order intermodulation caused by the other channel(s) being allocated subcarriers along the total bandwidth.

<u>Brief description of drawings</u>

Embodiments will now be described in more detail in relation to the accompanying drawings, in which:

Figure 1a is a flowchart of a method performed by a subcarrier allocation device for allocating N channels to carrier frequencies along a total bandwidth according to an exemplifying embodiment.

Figure 1b is an illustration of channels being allocated subcarrier frequencies.

Figure 1c is a flowchart of a method performed by a subcarrier allocation device for allocating N channels to carrier frequencies along a total bandwidth according to another exemplifying embodiment.

Figure 1d is a flowchart of a method performed by a subcarrier allocation device for allocating N channels to carrier frequencies along a total bandwidth according to still an exemplifying embodiment.

Figure 1e is a flowchart of a method performed by a subcarrier allocation device for allocating N channels to carrier frequencies along a total bandwidth according to yet an exemplifying embodiment.

Figure 2a is an illustration of a channel being allocated to a subcarrier.

Figure 2b is an illustration of two channels being allocated a respective subcarrier.

Figure 2c is an illustration of three channels being allocated subcarriers.

Figure 2d is an illustration of three different examples with two, four and eight channels being allocated respective subcarriers.

Figure 3 is a block diagram of a subcarrier allocation device for allocating N channels to carrier frequencies along a total bandwidth according to an exemplifying embodiment.

Figure 4 is a block diagram of a subcarrier allocation device for allocating N channels to carrier frequencies along a total bandwidth according to another exemplifying embodiment.

Figure 5a is a block diagram of an arrangement in a subcarrier allocation device for allocating N channels to carrier frequencies along a total bandwidth according to an exemplifying embodiment.

Figure 5b is a block diagram illustrating an example in which the subcarrier allocation device in comprised in a transceiver, receiver or transmitter.

Figure 5c is a block diagram illustrating an example in which the subcarrier allocation device in comprised in a network node.

Figure 6 is an illustration of optimum number of channels. $C$2=B, B4: maximum frequency, D4: 8 tuple, E4: 4tuple, F4: double, G4: single channel, H4: optimum number of channels for a given maximum frequency.

Figure 7 is a diagram illustrating a maximum input frequency of a modulator, e.g. a laser.

## Detailed description

Briefly described, a subcarrier allocation device and a method performed thereby for allocating N channels to subcarrier frequencies along a total bandwidth, TB, wherein N is an integer equal to, or larger than, 2, are provided. By allocating the channels to subcarriers being spaced apart according to a specific pattern, impairments due to first order harmonics and second and third order intermodulation from other channels may be avoided.

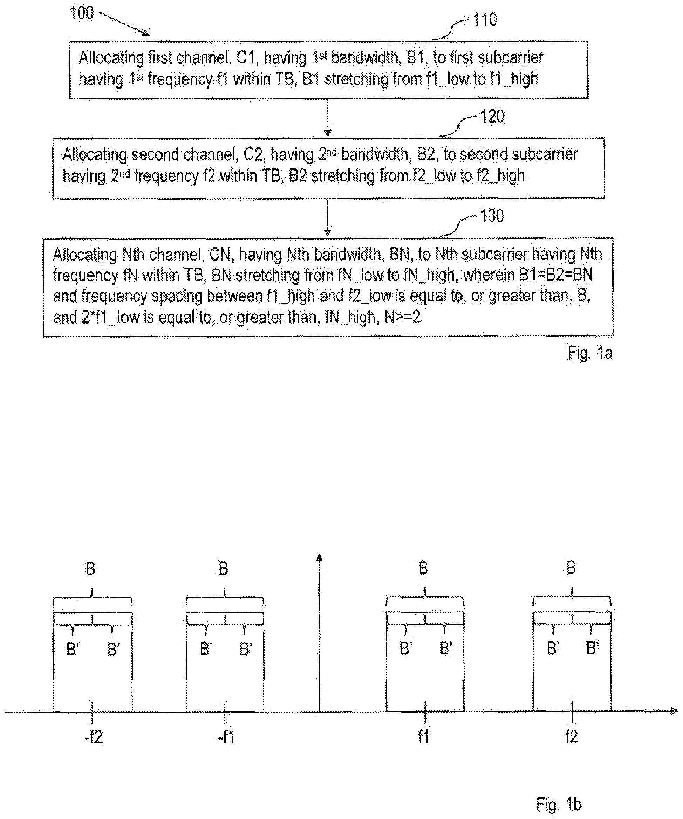

Embodiments of such a method, performed by a subcarrier allocation device will now be described with reference to **figures 1a-1e.**

**Figure 1a** illustrates the method performed by a subcarrier allocation device for allocating N channels to carrier frequencies along a total bandwidth, TB, wherein N is an integer equal to, or larger than, 2, comprising allocating 110 a first channel, C1, having a first bandwidth, B1, to a first subcarrier having a first frequency, f1, within the TB, wherein B1 stretches from a first low frequency, f1_low, to a first high frequency, f1_high; and allocating 120 a second channel, C2, having a second bandwidth, B2, to a second subcarrier having a second frequency, f2, within the TB, wherein B2 stretches from a second low frequency, f2_low, to a second high frequency, f2_high. The method further comprises allocating 130 an Nth channel, CN, having an Nth bandwidth, BN, to an Nth subcarrier having an Nth frequency, fN, within TB, wherein BN stretches from an Nth low frequency, fN_low, to an Nth high frequency, fN_high. The bandwidth B1=B2=BN=B, wherein the frequency spacing between f1_high and f2_low is equal to or greater than the bandwidth B of the channels, and 2*f1_low is equal to or greater than fN_high.

The method is performed by a subcarrier allocation device. The subcarrier allocation device may be incorporated into a transmitter, receiver or transceiver. The subcarrier allocation device may alternatively be connectable to a transmitter, receiver or transceiver. The subcarrier allocation device may also be a stand-alone device and used for allocating the N number of channels to carrier frequencies along the TB. Once the channels have been allocated to the carrier frequencies according to the method performed by the subcarrier allocation device, the result of the allocation is inputted into a transmitter, receiver or transceiver in order to determine where the channels are located, or are to be located, along the TB.

Firstly, the number of channels to be allocated to carrier frequencies along the TB is denoted as N. Generally, the number of channels are an even number of channels, thus N=2, 4, 6, 8, etc. Of course, in theory, N may be an odd number of channels, as will be exemplified and described below. It shall also be pointed out that the method steps or actions described herein may be performed in another order than described herein.

The first channel, C1, has the first bandwidth, B1, and it is allocated to the first subcarrier having the first frequency, f1, within the TB, wherein B1 stretches from the first low frequency, f1_low, to the first high frequency, f1_high.

Consequently, the first frequency, f1, may be a middle or centre frequency of the first subcarrier. It shall be pointed out that f1 may not be centred, merely comprised in the bandwidth, B1, of the channel. This is true for all frequencies f1-fN analogously. For example, single sideband modulation, SSB, may cause the frequency f1-fN not being centred within the respective bandwidth, B1-BN of the channel. Generally, f_low <=f<=f_high.

The second channel, C2, has the second bandwidth B2, which is the same as the first bandwidth, B1. All channels have the same bandwidth, just located at different frequencies along the TB. Therefore, the different bandwidths are denoted B1, B2, ..., BN in this disclosure indicating that they are located at different frequencies along the TB, but they all have the same "value". Mathematically, $|B1| = |B2| = \cdots = |BN|$. B2 stretches from the second low frequency, f2_low, to the second high frequency, f2_high. Consequently, the second frequency, f2, may be a middle or centre frequency of the second subcarrier.

In other words, f1_low, f1_high can be said to be fundamental products of f1. Likewise, f2_low, f2_high can be said to be fundamental products of f2.

All channels, or subcarriers, cause harmonics and second and third order intermodulation. **Figure 1b** illustrates two channels with centre frequency $f_1$ and $f_2$, each having bandwidth B=2B'.

The limiting conditions for not having first order harmonics of signals in one channel creating impairments in the other channel are:

$$2*(f1-B') \geq f2+B' \quad <=> \quad 2*f1 \geq f2+3*B' \tag{1}$$

The limiting conditions for not having second order intermodulation of signals of one channel creating impairments in the other channel are:

$$(f1-B') + (f2-B') \geq f2+B' \quad <=> \quad f1 \geq 3*B' \tag{2}$$

$$|(f2+B') - (f1-B')| \leq f1-B' \quad <=> \quad 2*f1 \geq f2+3B' \tag{3}$$

The limiting conditions for not having third order intermodulation of signals of one channel creating impairments in the other channel are:

$$|(f1-B') - [(f2+B') - (f1-B')]| \leq f1-B' \quad <=> \quad |2*f1-f2-3*B'| \leq f1-B' \tag{4}$$

$$(f1-B') + [(f2-B') - (f1+B')] \geq f2+B' \quad <=> \quad f2-f1 \geq 4B' \tag{5}$$

Combining equation (3) and (5) results in:

$$f1+4*B' \leq f2 \leq 2*f1-3*B' \quad <=> \quad f1 \geq 7B' \tag{6}$$

In the limit of equation (6), for the tightest channel allocation, i.e. $f1 = 7 * B'$, we get for f2:

$$7*B' + 4*B' \leq f2 \leq 2*7*B' - 3*B' \quad <=> \quad f2 = 11*B' \tag{7}$$

Fulfilling (6) and (7) guarantees that (1)-(5) are fulfilled. Consequently, with no intermodulation or harmonic impairments, the frequency spacing between the first and the second channel, i.e. the frequency spacing between f1_high (which corresponds to $f1 + B'$) and f2_low (which corresponds to $f2 - B'$), is equal to or greater than the bandwidth $((11 - 1) - (7 + 1))B' = 2B' = B$ of the channels. Further, the condition 2*f1_low being equal to or greater than f2_high is fulfilled if equations (6) and (7) are fulfilled, in order to eliminate the second order intermodulation.

In this manner, the subcarrier allocation device determines conditions where along the TB, subcarriers having frequencies f1 and f2 respectively are to be allocated such that impairments due to first order harmonics and second and third order intermodulation may be avoided.

It shall be pointed out that N is equal to, or greater than 2, wherein in the case N=2, step, or action, 130 is the same step, or action, 120.

A channel may also be denoted a transmit spectrum, or receiver spectrum, meaning the signals to be transmitted, by a transmitting device, using the frequencies in the bandwidth of the channel, i.e. frequencies between the frequency band edges of the transmitted signal, and received by a receiving device. In other words, signals may be transmitted and received on each channel by means of the different frequencies comprised in the bandwidth of the channel.

The method may have several advantages. One possible advantage is that the quality of the respective channel may be improved since they need not suffer from the impairments of first order harmonics and second and third order intermodulation caused by the other channel(s) being allocated subcarriers along the total bandwidth. Another possible advantage is that no additional hardware, or signal processing means, is needed to correct, or compensate for, the impairments of first order harmonics and second and third order intermodulation caused by the other channel(s) being allocated subcarriers along the total bandwidth.

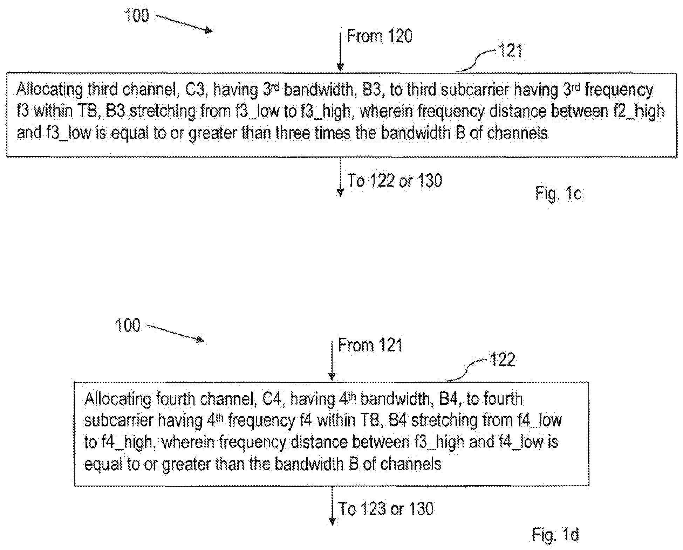

The method may further comprise, as illustrated in **figure 1c,** allocating 121 a third channel, C3, having a third bandwidth, B3, to a third subcarrier having a third frequency, f3, within the TB, wherein B3 stretches from a third low frequency, f3_low, to a third high frequency, f3_high, wherein B3=B, wherein the frequency spacing between f2_high and f3_low is equal to or greater than three times the bandwidth B of the channels, i.e. 3*B.

As stated above, N is generally an even number but an odd number is theoretically and practically possible. Using the equations (1)-(7), the first two channels, C1 and C2 each have a bandwidth of B, and the frequency spacing between them is also B. Thus, C1 and C2 occupy a bandwidth of 3B, i.e. B1+B+B2=3B. They together generate first order harmonics and second and third order intermodulation, and consequently, the frequency spacing between C1+C2 and C3 should then be equal to or greater than the bandwidth of C1+C2. Therefore, the frequency spacing between C1+C2 should be equal to or larger than 3B, i.e. the frequency spacing between f2_high and f3_low is equal to or greater than three times the bandwidth B of the channels, which is 3B, or 3*B. This means that no information signals are to be transmitted on any frequency between f2_high and f3_low.

Still further, the condition 2*f1_low being equal to or greater than fN_high should be fulfilled, resulting in that 2*f1_low being equal to or greater than f3_high.

The method may further comprise, as illustrated in **figure 1d,** allocating 122 a fourth channel, C4, having a fourth bandwidth, B4, to a fourth subcarrier having a fourth frequency, f4, within the TB, wherein B4 stretches from a fourth low frequency, f4_low, to a fourth high frequency, f4_high, wherein B4=B, wherein the frequency distance between f3_high and f4_low is equal to or greater than the bandwidth B of the channels.

If more than 2 channels are to be allocated, (1)-(7) can be applied recursively, by considering groups of channels. For example, to allocate 4 channels C1-C4, in a first round conditions for C1-C2 and C3-C4 would be derived. In a second round, conditions for two composed signals, the first signal being the pair C1-C2, the second signal being the pair C3-C4, can be derived. The fourth channel, C4, together with C3, can be said to constitute a pair, as well as C1 and C2 can be said to constitute a pair. Thus the relation between C1+C2 and C3+C4 can be said to be analogous to the relation between C1 and C2 when only two channels are to be allocated. C1 and C2 respectively, as well as C3 and C4 respectively give rise to, or generate, first order harmonics and second and third order intermodulation as described above. In order for the first order harmonics and second and third order intermodulation of C1 not to affect C2 and vice versa, the frequency spacing between the two is equal to or greater than the bandwidth of the respective channel, which is B. The same reasoning is valid for C3 and C4. As also described above, C1 and C2 together, as a pair give rise to, or generate first order harmonics and second and third order intermodulation, as well as C3 and C4 together. In order for the first order harmonics and second and third order intermodulation of C1+C2 not to affect C3+C4 and vice versa, the frequency spacing between the two pairs is equal to or greater than the bandwidth of the respective pair, which is 3B. The same reasoning is valid for the first order harmonics and second and third order intermodulation generated by C3+C4.

Additionally, the condition 2*f1_low being equal to or greater than fN_high should be fulfilled, resulting in that 2*f1_low being equal to or greater than f4_high.

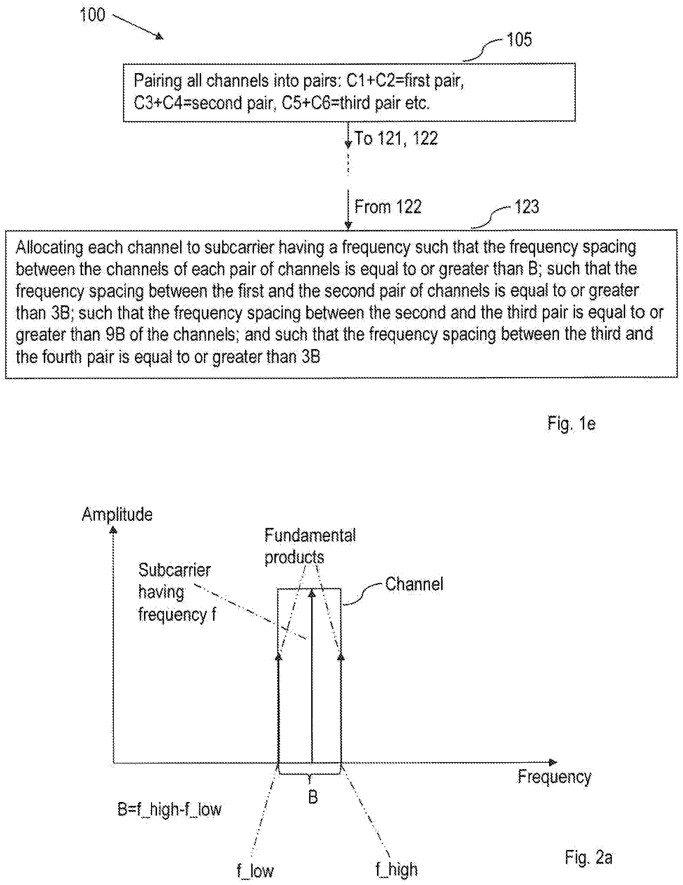

According to an embodiment, illustrated in **figure 1e,** wherein additional channels C5, C6, C7 and C8..., CN, are also to be allocated to subcarriers, all having bandwidth B, the method further comprises pairing 105 all the channels into pairs so that C1 and C2 is a first pair, C3 and C4 is a second pair, C5 and C6 is a third pair, and the C7 and C8 is the fourth pair, and CN-1 and CN is the N/2:th pair; and allocating 123 each channel to a subcarrier having a frequency such that the frequency spacing between the channels, or transmit spectra, of each pair of channels, i.e. the frequency spacing between fx-1_high and fx_low is equal to or greater than the bandwidth B of the channels, such that the frequency spacing between the first and the second pair of channels, or transmit spectra, is equal to or greater than three times the bandwidth B of the channels, i.e. the frequency spacing between f2_high and f3_low >=3*B, such that the frequency spacing between the second and the third pair is equal to or greater than 9 times the bandwidth B of the channels, i.e. the frequency spacing between f4_high and f5_low >=9*B, and such that the frequency spacing between the third and the fourth pair is equal to or greater than three times the bandwidth B of the channels, i.e. the frequency spacing between f6_high and f7_low >=3*B.

As described above, one single channel gives rise to, or generates first order harmonics and second and third order intermodulation, wherein the frequency spacing between two channels in a pair is equal to or greater than the bandwidth of the channel, in the manner as described above for C1 and C2, and as for C3 and C4. Extending the reasoning for when C3 and C4 were added to C1 and C2, C1-C4 may be seen as a "group", which group also gives rise to, or generates, first order harmonics and second and third order intermodulation as a group. Applying equations (1)-(7), the group of C1-C4, i.e. C1+C2+C3+C4, gives rise to, or generates, first order harmonics and second and third order intermodulation dependent on the occupied spectrum range of C1-C4. As described above, C1+C2 and C3+C4 respectively occupy at least 3B of the total bandwidth, TB, thus together they occupy at least 6B. The frequency spacing between C1+C2 and C3+C4 is 3B, resulting in that the group C1-C4 occupy at least 6B+3B=9B.

When C3 and C4 were added, the "relationship" between C3 and C4 are the same as the relationship between C1 and C2, i.e. the frequency spacing between C1 and C2 is the same as the frequency spacing between C3 and C4. Analogously, the relationship between C5-C8 may be the same as between C1-C4. Consequently, the frequency spacing between C5+C6 and C7+C8 is 3B.

Applying equations (1)-(7), the frequency spacing between the first group, i.e. C1-C4 and the second group, i.e. C5-C8 should be equal to, or greater than, the bandwidth of the respective group, which is 9B as described above.

Additionally, the condition 2*f1_low being equal to or greater than fN_high should be fulfilled, resulting in that 2*f1_low being equal to or greater than f8_high.

In this example, N is an even number. However, the same reasoning applies even adding a 9th channel to the existing eight channels, i.e. N=9. The existing eight channels together give rise to, or generates, first order harmonics and second and third order intermodulation such that the third order intermodulation occurs at a frequency distance from the existing eight channels corresponding to the bandwidth of the existing eight channels, i.e. 27B. Thus, even in the case of adding only a 9th channel, the frequency spacing between the 8th channel and the 9th channel should be 27B. Any number of 10th, 11th, 12th, ..., 16th channel may be added to the existing eight channels, wherein the allocation of the added number of channels follows the same internal relative relationship in an imaginary second group C9-C16.

According to yet an embodiment, wherein additional eight channels, C9, C10, ..., C16, are to be allocated to carrier frequencies, the method comprises pairing the channels C9-C16 in the same manner as for channels C1-C8, so that C9+C10 is a fifth pair, etc., and allocating the channels to subcarriers in the same manner as for channels C1-C8, wherein the frequency spacing between the forth pair, C7+C8, and the fifth pair, C9+C10, is equal to or greater than 27 times the bandwidth B of the channels, i.e. the frequency spacing between f8_high and f9_low >=27*B.

When the additional eight channels, C9, C10, ..., C16, are to be allocated to carrier frequencies, the same, or similar reasoning may be applied as above. In this case, channels C1-C8 constitute a first group and channels C9-C16 constitute a second group. The internal relationship between C9-C16 is the same as the internal relationship between C1-C8, as this way no group generates first order harmonics and second and third order modulation resulting in impairments for any channel within the respective group. The respective group gives rise to, or generates first order harmonics and second and third order intermodulation as a group. In order for the first group and the second group to not impair each other due to the first order harmonics and second and third order intermodulation, the frequency spacing between the first group and the second group should be equal to, or greater than, the bandwidth the respective group occupies along the TB.

Each group, i.e. C1-C8 and C9-C16, occupy 27B. As described above, C1-C4 occupy 9B, and C5-C8 occupy 9B. The frequency spacing between C1-C4 and C5-C8 is another 9B. Thus, the total bandwidth occupied by C1-C8, and analogously C9-C16, is 27B

Consequently, applying equations (1)-(7), the frequency spacing between the first group C1-C8 and the second group C9-C16 is equal to, or greater than, the bandwidth of the respective group, which is 27B.

Additionally, the condition 2*f1_low being equal to or greater than fN_high should be fulfilled, resulting in that 2*f1_low being equal to or greater than f16_high.

Further, the method comprises, wherein whenever a number of channels are to be added, such that the total number of channels are doubled, pairing and allocating carrier frequencies to the channels to be added according to the carrier frequencies allocation scheme for the existing channels, and allocating the additional channels such that the frequency spacing between the transmit spectra of the existing and the added channels is equal to or greater than $B * 3^k$, where k corresponds to the number of times the number of channels has been doubled, i.e. k=0 when the first channel is allocated a first subcarrier and the second channel is allocated a second subcarrier, k=1 when the first pair C1+C2 is doubled into two pairs C1+C2 and C3+C4, k=2 when the two pairs are doubled into four pairs, k=3 when the four pairs are doubled into eight pairs, etc.

Whenever the number of channels is to be added, such that the total number of channels are doubled, the existing channels may be regarded as a first group, which is then "copied" with regards to the internal relationship between the two groups. The equations (1)-(7) gives that the frequency spacing between the groups should be equal to, or greater than, the bandwidth of the respective group in order to avoid impairments due to the first order harmonics and second and third order intermodulation caused by the respective group. Mathematically, this can be expressed as the frequency spacing between existing group of channels and the added group of channels should be equal to or greater than $B*3^k$, where k corresponds to the number of times the number of channels has been doubled, i.e. k=0 when the first channel is allocated a first subcarrier and the second channel is allocated a second subcarrier, k=1 when the first pair is doubled into two pairs, k=2 when the two pairs are doubled into four pairs, k=3 when the four pairs are doubled into eight pairs, etc.

Additionally, the condition 2*f1_low being equal to or greater than fN_high should be fulfilled.

**Figure 2a** is an illustration of a channel being allocated to a subcarrier. Figure 2a illustrates an actual channel approximated with a rectangular shaped channel. The actual channel may not be wider than B. The subcarrier having frequency f of the channel is in the middle of the channel, having respective fundamental products, which corresponds to f_low and f_high. The channel is illustrated having bandwidth B, which is the difference in frequency between the fundamental products, i.e. f_high minus f_low.

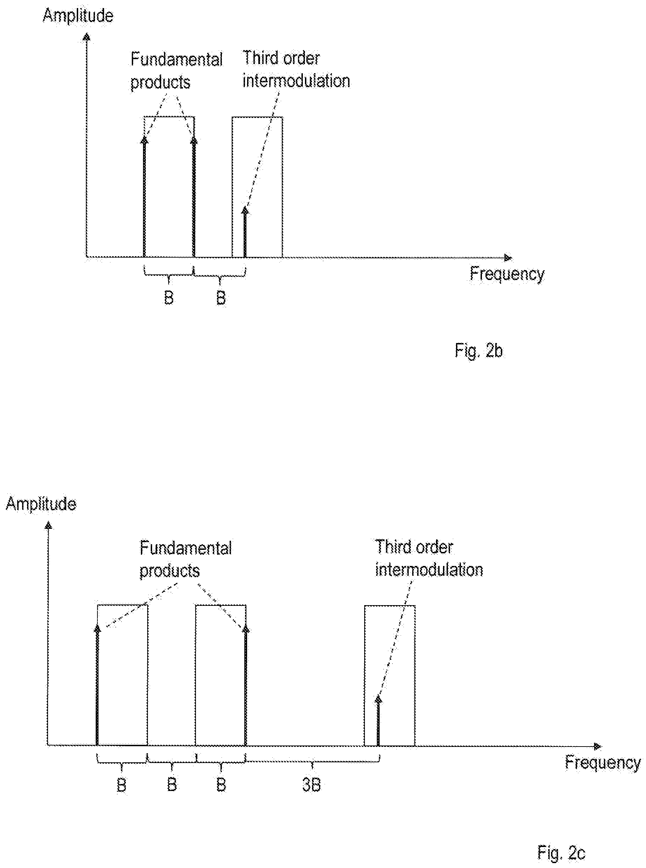

**Figure 2b** is an illustration of two channels, wherein the second channel to the right in the figure is suffering from impairments due to first order harmonics and second and third order intermodulation of the first channel to the left in the figure. In figure 2b, the gap between the two channels is smaller than B resulting in the third order intermodulation of the first channel (to the left in the figure) occurring within the bandwidth of the second channel (to the right of the figure). It shall be pointed out that this is merely an illustrative and schematic figure. Also the second channel may give rise to, or generate, first order harmonics and second and third order intermodulation which may occur within the bandwidth of the first channel, even though this is not illustrated in figure 2b. Figure 2b also illustrates that the third order intermodulation of the first channel occur at a frequency distance from the first channel corresponding to the bandwidth of the first channel.

**Figure 2c** is an illustration of three channels being allocated subcarriers. Each channel has bandwidth B and the frequency spacing between the first channel (to the very left in the figure) and the second channel (directly right of the first channel) is B. C1 and C2 as a group has bandwidth 3B, and together, as a group, they give rise to, or generate first order harmonics and second and third order intermodulation, wherein the third order intermodulation occurs at a frequency distance corresponding to the bandwidth of the group, i.e. 3B. In figure 2c, a third channel (to the very right in the figure) is allocated a subcarrier wherein the frequency spacing between the second and the third channel is less than 3B, wherein the third order intermodulation caused by the first and the second channel together occurs within the bandwidth of the third channel.

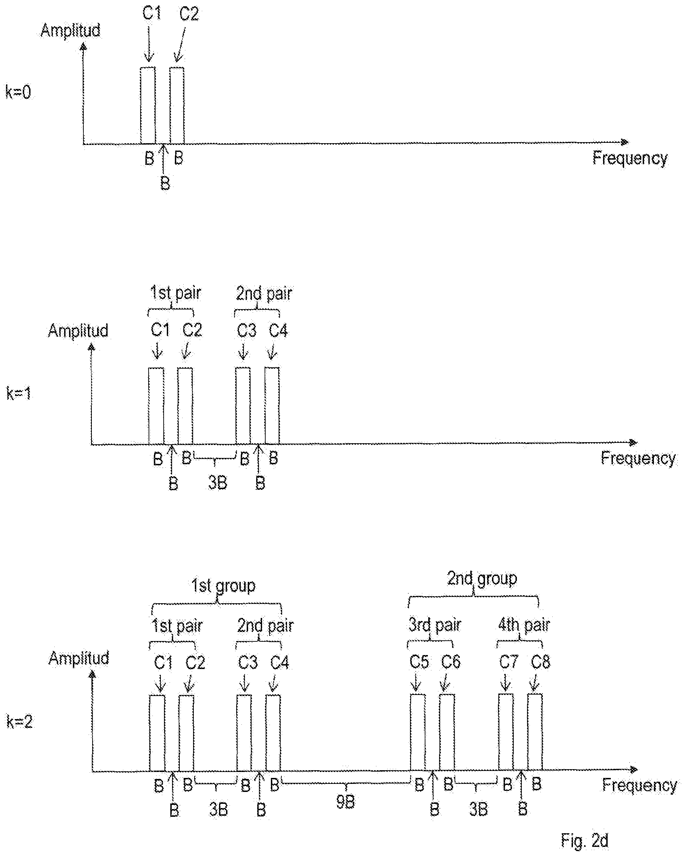

**Figure 2d** illustrates three different examples with two, four and eight channels. The first example is with two channels, wherein each channel has bandwidth B and the frequency spacing between the channels is B and k is zero, 0.

In the middle, second, example, the first pair in the top, first, example is doubled. As can be seen from the figure, and as explained above, the first two channels, constituting a first pair, occupy a bandwidth of 3B, and the second two channels, constituting a second pair, occupy a bandwidth of 3B. In order for the two pairs not to impair each other with regards to third order intermodulation, the frequency spacing between the two pairs is equal to, or greater than, the bandwidth of the respective pair, i.e. 3B.

In the bottom, third, example, the two pairs from the second example constitute a first group, which group is doubled, hence the relative internal relationship within the second group (channels C5, C6, C7 and C8) corresponds to the relative internal relationship within the first group (C1, C2, C3 and C4). The first and the second group occupy a bandwidth of 9B, and hence with reference to equations (1)-(7), the frequency spacing between the first and the second group is equal to, or greater than, the bandwidth of the respective group, i.e. 9B.

The same reasoning applies when duplicating the eight channels C1-C8 to C9-C16 and adding C9-C16.

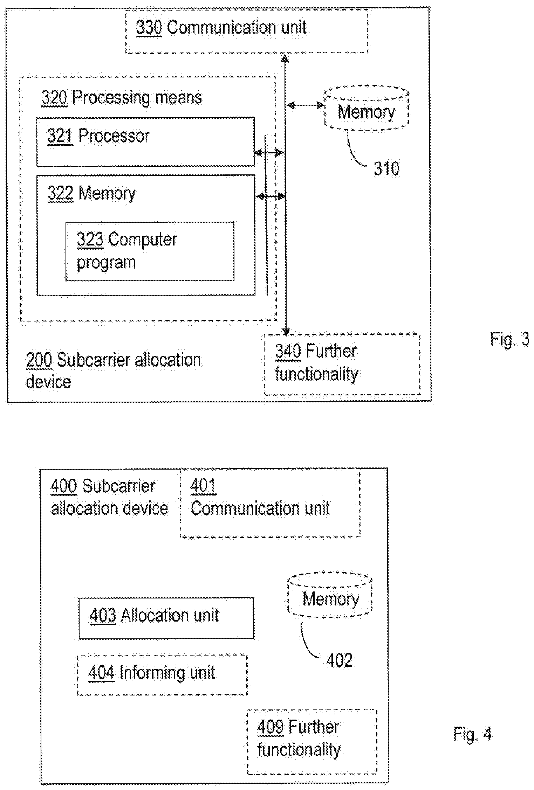

Embodiments herein also relates to a subcarrier allocation device for allocating N channels to carrier frequencies along a total bandwidth, TB, wherein N is an integer equal to, or larger than, 2. Embodiments of such a subcarrier allocation device will now be described with reference to **figures 3** and **4.** The subcarrier allocation device has the same technical features, objects and advantages as the method performed by the subcarrier allocation device as described above. The subcarrier allocation device will only be described in brief in order to avoid unnecessary repetition.

**Figures 3** and **4** illustrates the subcarrier allocation device (300, 400) being configured to: allocate a first channel, C1, having a first bandwidth, B1, to a first subcarrier having a first frequency, f1, within the TB, wherein B1 stretches from a first low frequency, f1_low, to a first high frequency, f1_high; and to allocate a second channel, C2, having a second bandwidth, B2, to a second subcarrier having a second frequency, f2, within the TB, wherein B2 stretches from a second low frequency, f2_low, to a second high frequency, f2_high. The subcarrier allocation device 300, 400 is further configured to: allocate an Nth channel, CN, having an Nth bandwidth, BN, to an Nth subcarrier having an Nth frequency, fN, within TB, wherein BN stretches from an Nth low frequency, fN_low, to an Nth high frequency, fN_high, wherein B1=B2=BN=B, wherein the frequency spacing between f1_high and f2_low is equal to or greater than the bandwidth B of the channels, and 2*f1_low is equal to or greater than fN_high.

The subcarrier allocation device 300, 400 may be implemented, or realized, in different ways. **Figures 3** and **4** illustrate two different examples of implementation.

**Figure 3** illustrates the subcarrier allocation device 300 comprising a processor 321 and memory 322, the memory comprising instructions, e.g. by means of a computer program 323, which when executed by the processor 321 causes the subcarrier allocation device 300 to allocate a first channel, C1, having a first bandwidth, B1, to a first subcarrier having a first frequency, f1, within the TB, wherein B1 stretches from a first low frequency, f1_low, to a first high frequency, f1_high; and to allocate a second channel, C2, having a second bandwidth, B2, to a second subcarrier having a second frequency, f2, within the TB, wherein B2 stretches from a second low frequency, f2_low, to a second high frequency, f2_high. The memory further comprises instructions, e.g. by means of a computer program 323, which when executed by the processor 321 causes the subcarrier allocation device 300 to allocate an Nth channel, CN, having an Nth bandwidth, BN, to an Nth subcarrier having an Nth frequency, fN, within TB, wherein BN stretches from an Nth low frequency, fN_low, to an Nth high frequency, fN_high, wherein B1=B2=BN=B, wherein the frequency spacing between f1_high and f2_low is equal to or greater than the bandwidth B of the channels, and 2*f1_low is equal to or greater than fN_high.

**Figure 3** further illustrates the subcarrier allocation device comprising processing means 320, which comprises the memory 322 and the processor 321.

An alternative exemplifying implementation of the subcarrier allocation device is illustrated in figure 4. **Figure 4** illustrates the subcarrier allocation device 400 comprising an allocation unit 403 for allocating a first channel, C1, having a first bandwidth, B1, to a first subcarrier having a first frequency, f1, within the TB, wherein B1 stretches from a first low frequency, f1_low, to a first high frequency, f1_high; and allocating a second channel, C2, having a second bandwidth, B2, to a second subcarrier having a second frequency, f2, within the TB, wherein B2 stretches from a second low frequency, f2_low, to a second high frequency, f2_high. By means of the allocating unit 403 the subcarrier allocation device 400 is configured for allocating an Nth channel, CN, having an Nth bandwidth, BN, to an Nth subcarrier having an Nth frequency, fN, within TB, wherein BN stretches from an Nth low frequency, fN_low, to an Nth high frequency, fN_high. The bandwidth B1=B2=BN=B, wherein the frequency spacing between f1_high and f2_low is equal to or greater than the bandwidth B of the channels, and 2*f1_low is equal to or greater than fN_high.

The subcarrier allocation device has the same possible advantages as the method performed by the subcarrier allocation device. One possible advantages is that the quality of the respective channel may be improved since they need not suffer from the impairments of first order harmonics and second and third order intermodulation caused by the other channel(s) being allocated subcarriers along the total bandwidth. Another possible advantage is that no additional hardware, or signal processing means, is needed to correct, or compensate for, the impairments of first order harmonics and second and third order intermodulation caused by the other channel(s) being allocated subcarriers along the total bandwidth.

According to an embodiment, the subcarrier allocation device 300, 400 is further configured to allocate a third channel, C3 , having a third bandwidth, B3, to a third subcarrier having a third frequency, f3, within the TB, wherein B3 stretches from a third low frequency, f3_low, to a third high frequency, f3_high, wherein B1=B2=BN=B, wherein the frequency spacing between f2_high and f3_low is equal to or greater than three times the bandwidth B of the channels, i.e. 3B, and 2*f1_low is equal to or greater than fN_high.

According to yet an embodiment, the subcarrier allocation device 300, 400 is further configured to allocate a fourth channel, C4 , having a fourth bandwidth, B4, to a fourth subcarrier having a fourth frequency, f4, within the TB, wherein B4 stretches from a fourth low frequency, f4_low, to a fourth high frequency, f4_high, wherein B4=B, wherein the frequency distance between f3_high and f4_low is equal to or greater than the bandwidth B of the channels.

According to still an embodiment, wherein additional channels C5, C6, C7 and C8..., CN, are also to be allocated to subcarriers, all having bandwidth B, the subcarrier allocation device 300, 400 is further configured to pair all the channels into pairs so that C1 and C2 is a first pair, C3 and C4 is a second pair, C5 and C6 is a third pair, and the C7 and C8 is the fourth pair, and CN-1 and CN is the N/2:th pair; and to allocate each channel to a subcarrier having a frequency such that the frequency spacing between the channels, or transmit spectra, of each pair of channels, i.e. the frequency spacing between fx-1_high and fx_low is equal to or greater than the bandwidth B of the channels, such that the frequency spacing between the first and the second pair of channels, or transmit spectra, is equal to or greater than three times the bandwidth B of the channels, i.e. the frequency spacing between f2_high and f3_low >=3*B, such that the frequency spacing between the second and the third pair is equal to or greater than 9 times the bandwidth B of the channels, i.e. the frequency spacing between f4_high and f5_low >=9*B, and such that the frequency spacing between the third and the fourth pair is equal to or greater than three times the bandwidth B of the channels, i.e. the frequency spacing between f6_high and f7_low >=3*B.

According to a further embodiment, wherein additional eight channels, C9, C10, ..., C16, are to be allocated to carrier frequencies, the subcarrier allocation device 300, 400 is further configured to pair the channels C9-C16 in the same manner as for channels C1-C8, so that C9+C10 is a fifth pair, etc.; and to allocate the channels to subcarriers in the same manner as for channels C1-C8, wherein the frequency spacing between the forth pair, C7+C8, and the fifth pair, C9+C10, is equal to or greater than 27 times the bandwidth B of the channels, i.e. the frequency spacing between f8_high and f9_low >=27*B.

According to yet a further embodiment, wherein whenever a number of channels are to be added, such that the total number of channels are doubled, the subcarrier allocation device further being configured to pair and allocate carrier frequencies to the channels to be added according to the carrier frequencies allocation scheme for the existing channels, and to allocate the additional channels such that the frequency spacing between the transmit spectra of the existing and the added channels is equal to or greater than $B * 3^k$, where k corresponds to the number of times the number of channels has been doubled, i.e. k=0 when the first channel is allocated a first subcarrier and the second channel is allocated a second subcarrier, k=1 when the first pair is doubled into two pairs, k=2 when the two pairs are doubled into four pairs, k=3 when the four pairs are doubled into eight pairs, etc.

**Figures 3** and **4** also illustrate the subcarrier allocation device 300, 400 comprising a memory 310, 402. It shall be pointed out that figures 3 and 4 are merely an exemplifying illustration and memory 310, 402 may be optional, the memory 310 may be a part of the memory 322 or be a further memory of the subcarrier allocation device 300, 400. The memory may for example comprise information relating to the subcarrier allocation device 300, 400, to statistics of operation of the subcarrier allocation device 300, 400 or to values of parameters, just to give a couple of illustrating examples. Still further, **figure 3** illustrates the subcarrier allocation device 300 comprising a communication unit 330. The communication unit 330 may comprise an interface through which the subcarrier allocation device 300 communicates with other nodes or entities of a communication network as well as wireless device(s) of the communication network or with devices coupled to the subcarrier allocation device 300. **Figures 3** and **4** also illustrate the subcarrier allocation device 300, 400 comprising further functionality 340, 409. The further functionality 340, 409 may comprise hardware of software necessary for the subcarrier allocation device 300, 400 to perform different tasks that are not disclosed herein. **Figure 4** also illustrates the subcarrier allocation device 400 comprising an informing unit 404 illustrated by a dashed box. This is merely an exemplifying illustration, and the informing unit 404 may be configured to inform other nodes, entities and/or devices about the allocated subcarriers to channels.

In **figure 4,** the subcarrier allocation device 400 is also illustrated comprising a communication unit 401. Through this unit, the subcarrier allocation device 400 is adapted to communicate with other nodes and/or entities e.g. in a wireless communication network or coupled to the subcarrier allocation device 400. The communication unit 401 may comprise more than one receiving arrangement. For example, the communication unit 401 may be connected to both a wire and an antenna, by means of which the subcarrier allocation device 400 is enabled to communicate with other nodes and/or entities in the wireless communication network or coupled to the subcarrier allocation device 400. Similarly, the communication unit 401 may comprise more than one transmitting arrangement, which in turn are connected to both a wire and an antenna, by means of which the subcarrier allocation device 400 is enabled to communicate with other nodes and/or entities in the wireless communication network or coupled to the subcarrier allocation device 400. The subcarrier allocation device 400 further comprises a memory 402 for storing data. Further, the subcarrier allocation device 400 may comprise a control or processing unit (not shown) which in turn is connected to the unit 403. It shall be pointed out that this is merely an illustrative example and the subcarrier allocation device 400 may comprise more, less or other units or modules which execute the functions of the subcarrier allocation device 400 in the same manner as the units illustrated in **figure 4.**

It should be noted that **figure 4** merely illustrates various functional units in the subcarrier allocation device 400 in a logical sense. The functions in practice may be implemented using any suitable software and hardware means/circuits etc. Thus, the embodiments are generally not limited to the shown structures of the subcarrier allocation device 400 and the functional units. Hence, the previously described exemplary embodiments may be realised in many ways. For example, one embodiment includes a computer-readable medium having instructions stored thereon that are executable by the control or processing unit for executing the method steps in the subcarrier allocation device 400. The instructions executable by the computing system and stored on the computer-readable medium perform the method steps of the subcarrier allocation device 400 as set forth in the claims.

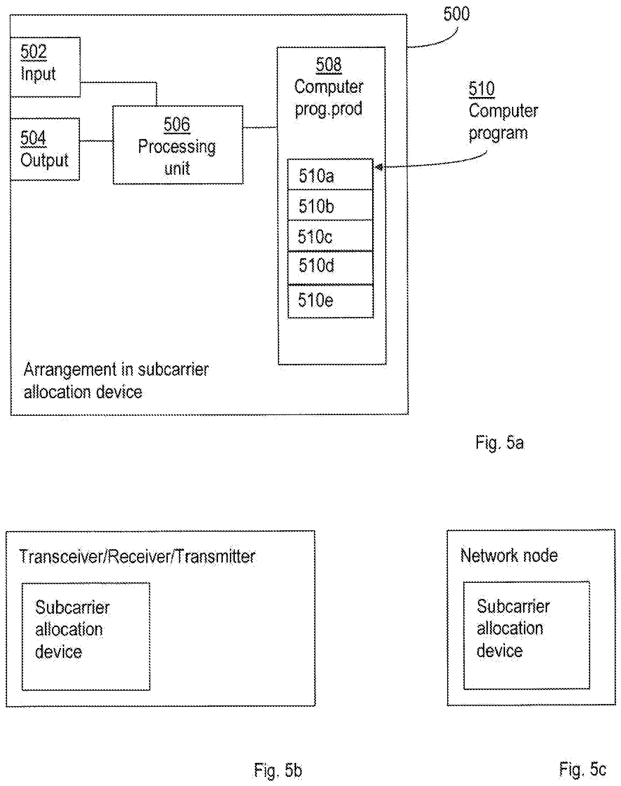

**Figure 5a** schematically shows an embodiment of an arrangement in a subcarrier allocation device 500. Comprised in the arrangement in the subcarrier allocation device 500 are here a processing unit 506, e.g. with a Digital Signal Processor, DSP. The processing unit 506 may be a single unit or a plurality of units to perform different actions of procedures described herein. The subcarrier allocation device 500 may also comprise an input unit 502 for receiving signals from other entities, and an output unit 504 for providing signal(s) to other entities. The input unit and the output unit may be arranged as an integrated entity or as illustrated in the example of figure 4, as one or more interfaces 401.

Furthermore, the subcarrier allocation device 500 comprises at least one computer program product 508 in the form of a non-volatile memory, e.g. an Electrically Erasable Programmable Read-Only Memory, EEPROM, a flash memory and a hard drive. The computer program product 508 comprises a computer program 510, which comprises code means, which when executed in the processing unit 506 in the arrangement in the subcarrier allocation device 500 causes the subcarrier allocation device to perform the actions e.g. of the procedure described earlier in conjunction with figures 1a-1d.

The computer program 510 may be configured as a computer program code structured in computer program modules 510a-510e. Hence, in an exemplifying embodiment, the code means in the computer program of the subcarrier allocation device 500 comprises an allocating unit, or module, for allocating a first channel, C1, having a first bandwidth, B1, to a first subcarrier having a first frequency, f1, within the TB, wherein B1 stretches from a first low frequency, f1_low, to a first high frequency, f1_high; and for allocating a second channel, C2, having a second bandwidth, B2, to a second subcarrier having a second frequency, f2, within the TB, wherein B2 stretches from a second low frequency, f2_low, to a second high frequency, f2_high. By means of the allocating unit, or module, the subcarrier allocation device further allocates an Nth channel, CN, having an Nth bandwidth, BN, to an Nth subcarrier having an Nth frequency, fN, within TB, wherein BN stretches from an Nth low frequency, fN_low, to an Nth high frequency, fN_high. The bandwidth B1=B2=BN=B, wherein the frequency spacing between f1_high and f2_low is equal to or greater than the bandwidth B of the channels, and 2*f1_low is equal to or greater than fN_high.

The computer program modules could essentially perform the actions of the flow illustrated in figures 1a-1e, to emulate the subcarrier allocation device 400. In other words, when the different computer program modules are executed in the processing unit 506, they may correspond to the unit 403 of figure 4.

Although the code means in the embodiments disclosed above in conjunction with figure 4 are implemented as computer program modules which when executed in the respective processing unit causes the subcarrier allocation device to perform the actions described above in the conjunction with figures mentioned above, at least one of the code means may in alternative embodiments be implemented at least partly as hardware circuits.

The processor may be a single Central Processing Unit, CPU, but could also comprise two or more processing units. For example, the processor may include general purpose microprocessors; instruction set processors and/or related chips sets and/or special purpose microprocessors such as Application Specific Integrated Circuits, ASICs. The processor may also comprise board memory for caching purposes. The computer program may be carried by a computer program product connected to the processor. The computer program product may comprise a computer readable medium on which the computer program is stored. For example, the computer program product may be a flash memory, a Random-Access Memory RAM, Read-Only Memory, ROM, or an EEPROM, and the computer program modules described above could in alternative embodiments be distributed on different computer program products in the form of memories within the subcarrier allocation device.

It is to be understood that the choice of interacting units, as well as the naming of the units within this disclosure are only for exemplifying purpose, and nodes suitable to execute any of the methods described above may be configured in a plurality of alternative ways in order to be able to execute the suggested procedure actions.

It should also be noted that the units described in this disclosure are to be regarded as logical entities and not with necessity as separate physical entities.

By means of the subcarrier allocation device and the method performed thereby, harmonics of any channels may not be located in any other channels. Third order intermodulation products from any channels or any two channels may not me located in any other channels. The maximum input frequency of a modulation/demodulation device, i.e. the laser/photodiode, should not be exceeded. The laser/photodiode has a maximum input frequency, above this frequency the input signal may be attenuated. As described above, the channels may be paired and then grouped together and doubled several times. If each time the channels are doubled is denoted k, then the frequency spacing between existing group of channels and the added group of channels should be equal to or greater than $B * 3^k$, where k corresponds to the number of times the number of channels has been doubled, i.e. k=0 when the first channel is allocated a first subcarrier and the second channel is allocated a second subcarrier, k=1 when the first pair is doubled into two pairs, k=2 when the two pairs are doubled into four pairs, k=3 when the four pairs are doubled into eight pairs, etc.

**Figure 5b** and **5c** illustrate different examples of how the subcarrier allocation device may be incorporated into another device or arrangement such as a transceiver, transmitter or receiver; or into a network node. As stated above, the subcarrier allocation device may further be a stand-alone device, wherein the result of the subcarrier allocation may be e.g. programmed or otherwise transferred to e.g. a transceiver, transmitter or receiver. It shall be pointed out that the a transceiver, transmitter or receiver may in an example be comprised in a network node.

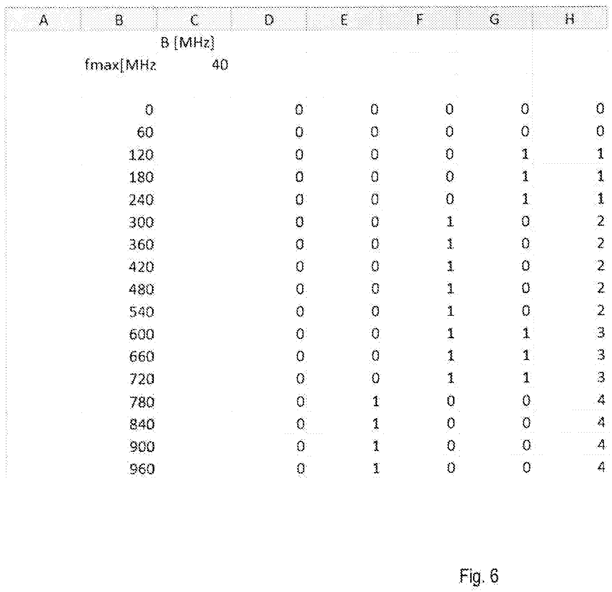

The optimum number of channels to be allocated subcarriers not exceeding a given maximum frequency, fmax, may be determined by, with reference to **figure 6:**

$$\$C\$2=B$$

$$D4=(B4/2/\$C\$2/27>1)$$

$$E4=((B4/2/\$C\$2-D4*54)/9>1)$$

$$F4=((B4/2/\$C\$2-D4*54-E4*18)/3>1)$$

$$G4=((B4/2/\$C\$2-D4*54-E4*18-F4*6)/1>1)$$

$$H4=D4*8+E4*4+F4*2+G4=N.$$

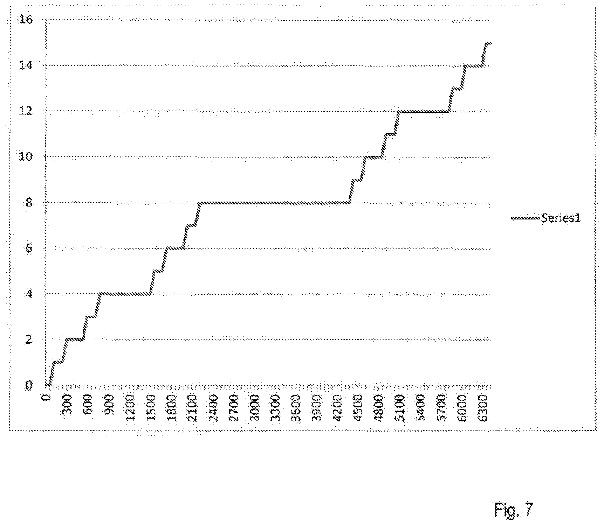

The formula above in Excel notation is valid for integer N satisfying 0<N<16, see also **figure 6. Figure 7** is a diagram illustrating a maximum input frequency of a modulator in MHz on the x-axis and the optimum number of channels on the y-axis. The total bandwidth, TB, in this example is 60 MHz. The diagram is a plot from the equations (1)-(7) above.

In **figure 6,** column H contains the maximum number of channels that may be allocated for the maximum modulator frequency in column B. The modulator is the laser photodiode. fmax in figure 6 denotes the respective frequency values in column B. $C$2=B in excel notation means that the value in column C and row 2 is the bandwidth, i.e. 40 MHz according to figure 6.

In **figure 7,** the horizontal axis or scale contains frequencies in column B of figure 6, and the vertical axis or scale contains maximum possible channels in column H.

The values in the table of figure 6 contains only those values corresponding to low frequencies, but the table may be extended according to the given equations (1)-(7).

A conclusion from the figures may be that if the channel bandwidth and the maximum input frequency is given, the number of available channels may be calculated. Also, if the channel bandwidth is given and the number of channels to be allocated is also given, it is possible to calculate how high the modulator frequency has to be by means of the equations above.

With regards to the equations (1)-(7), no assumption on the spectral constellation of a signal in either channel is made or exploited in order to derive (6) and (7), the pairing and grouping of channels as described above may be done. In other words, a pair of channels may be seen to constitute a new super channel, wherein the pair of channels on the new super channel may be seen as sub channels. Thus, the equations (1)-(7) are valid also for pairs of channels or groups comprising at least two pairs of channels.

## Claims

1. A method (100) performed by a subcarrier allocation device for allocating N channels to respective subcarriers along a total bandwidth, TB, wherein N is an integer equal to, or larger than, 2, the method comprising:

   - allocating (110) a first channel, C1 , having a first bandwidth, B1 , to a first subcarrier having a first frequency, f1 , within the TB, wherein B1 stretches from a first low frequency, f1_low, to a first high frequency, f1_high,
   - allocating (120) a second channel, C2, having a second bandwidth, B2, to a second subcarrier having a second frequency, f2, within the TB, wherein B2 stretches from a second low frequency, f2_low, to a second high frequency, f2_high, and
   the allocation follows the following conditions: B1=B2=B; the frequency spacing between f1_high and f2_low is equal to or greater than the bandwidth B of the channels; and 2*f1_low is equal to or greater than fN_high, wherein fN_high is a high frequency end of a bandwidth for an Nth subcarrier,
   the method being **characterized in that**
   whenever a number of channels are to be added such that the total number of channels are doubled, allocating subcarriers to the channels to be added according to the allocation scheme for the existing channels, and allocating the additional channels such that the frequency spacing between the transmit spectra of the existing and the added channels is equal to or greater than $B * 3^k$, where k corresponds to the number of times the number of channels has been doubled.

2. A subcarrier allocation device (300, 400) for allocating N channels to subcarriers along a total bandwidth, TB, wherein N is an integer equal to, or larger than, 2, the subcarrier allocation device being configured to:

   - allocate a first channel, C1, having a first bandwidth, B1, to a first subcarrier having a first frequency, f1, within the TB, wherein B1 stretches from a first low frequency, f1_low, to a first high frequency, f1_high,
   - allocate a second channel, C2, having a second bandwidth, B2, to a second subcarrier having a second frequency, f2, within the TB, wherein B2 stretches from a second low frequency, f2_low, to a second high frequency, f2_high, and
   wherein the allocation follows the following conditions: B1 =B2= B, the frequency spacing between f1_high and f2_low is equal to or greater than the bandwidth B of the channels, and 2*f1_low is equal to or greater than fN_high, wherein fN_high is a high frequency end of a bandwidth for an Nth subcarrier,

wherein the subcarrier allocation device is **characterized in** being further configured to, whenever a number of channels are to be added such that the total number of channels are doubled, allocate subcarriers to the channels to be added according to the allocation scheme for the existing channels, and allocate the additional channels such that the frequency spacing between the transmit spectra of the existing and the added channels is equal to or greater than $B * 3^k$, where k corresponds to the number of times the number of channels has been doubled.

3.  A Computer program (510), comprising computer readable code means performing the method according to claim 1.

4.  A Computer program product (508) comprising the computer program (510) according to claim 3.


**Patentansprüche**

1.  Verfahren (100), das von einer Unterträgerzuweisungsvorrichtung durchgeführt wird, zur Zuweisung von N Kanälen zu jeweiligen Unterträgern entlang einer Gesamtbandbreite, TB, wobei N eine ganze Zahl gleich wie oder größer als 2 ist, wobei das Verfahren umfasst:

    - Zuweisen (110) eines ersten Kanals, C1, mit einer ersten Bandbreite, B1, zu einem ersten Unterträger mit einer ersten Frequenz, f1, innerhalb der TB, wobei B1 sich von einer ersten Niederfrequenz, f1_low, zu einer ersten Hochfrequenz, f1_high erstreckt,
    - Zuweisen (120) eines zweiten Kanals, C2, mit einer zweiten Bandbreite, B2, zu einem ersten Unterträger mit einer zweiten Frequenz, f2, innerhalb der TB, wobei B2 sich von einer zweiten Niederfrequenz, f2_low, zu einer zweiten Hochfrequenz, f2_high erstreckt, und
    wobei die Zuweisung die folgenden Bedingungen erfüllt: B1 = B2 = B; der Frequenzabstand zwischen f1_high und f2_low ist gleich wie oder größer als die Bandbreite B der Kanäle; und 2 * f1_low ist gleich wie oder größer als fN_high, wobei fN_high ein Hochfrequenzende einer Bandbreite für einen N-ten Unterträger ist,
    wobei das Verfahren **gekennzeichnet ist durch:**
    Zuweisen, wann immer eine Anzahl von Kanälen hinzugefügt werden soll, derart dass die Gesamtanzahl von Kanälen verdoppelt wird, von Unterträgern zu den hinzuzufügenden Kanälen gemäß dem Zuweisungsschema für bestehende Kanäle und derartiges Zuweisen der zusätzlichen Kanäle, dass der Frequenzabstand zwischen den Sendespektren der bestehenden und der hinzugefügten Kanäle gleich wie oder größer als B * 3k ist, wobei k der Anzahl von Malen entspricht, welche die Anzahl von Kanälen verdoppelt wurde.

2.  Unterträgerzuweisungsvorrichtung (300, 400) zum Zuweisen von N Kanälen zu Unterträgern entlang einer Gesamtbandbreite, TB, wobei N eine ganze Zahl gleich wie oder größer als 2 ist, wobei die Unterträgerzuweisungsvorrichtung konfiguriert ist zum:

    - Zuweisen eines ersten Kanals, C1, mit einer ersten Bandbreite, B1, zu einem ersten Unterträger mit einer ersten Frequenz, f1, innerhalb der TB, wobei B1 sich von einer ersten Niederfrequenz, f1_low, zu einer ersten Hochfrequenz, f1_high erstreckt,
    - Zuweisen eines zweiten Kanals, C2, mit einer zweiten Bandbreite, B2, zu einem ersten Unterträger mit einer zweiten Frequenz, f2, innerhalb der TB, wobei B2 sich von einer zweiten Niederfrequenz, f2_low, zu einer zweiten Hochfrequenz, f2_high erstreckt, und

    wobei die Zuweisung die folgenden Bedingungen erfüllt: B1 = B2 = B; der Frequenzabstand zwischen f1_high und f2_low ist gleich wie oder größer als die Bandbreite B der Kanäle; und 2 * f1_low ist gleich wie oder größer als fN_high, wobei fN_high ein Hochfrequenzende einer Bandbreite für einen N-ten Unterträger ist,
    wobei die Unterträgerzuweisungsvorrichtung **dadurch gekennzeichnet ist, dass** sie ferner konfiguriert ist zum Zuweisen, wann immer eine Anzahl von Kanälen hinzugefügt werden soll, derart dass die Gesamtanzahl von Kanälen verdoppelt wird, von Unterträgern zu den hinzuzufügenden Kanälen gemäß dem Zuweisungsschema für bestehende Kanäle und derartigen Zuweisen der zusätzlichen Kanäle, dass der Frequenzabstand zwischen den Sendespektren der bestehenden und der hinzugefügten Kanäle gleich wie oder größer als B * 3k ist, wobei k der Anzahl von Malen entspricht, welche die Anzahl von Kanälen verdoppelt wurde.

3.  Computerprogramm (510), umfassend computerlesbare Codemittel zum Durchführen des Verfahrens nach Anspruch 1.

4. Computerprogrammprodukt (508), umfassend das Computerprogramm (510) nach Anspruch 3.

**Revendications**

1. Procédé (100) mis en oeuvre par un dispositif d'allocation de sous-porteuse pour allouer N canaux à des sous-porteuses respectives le long d'une bande passante totale, TB, dans lequel N est un nombre entier supérieur ou égal à 2, le procédé comprenant :

   - l'allocation (110) d'un premier canal, C1, comportant une première bande passante, B1, à une première sous-porteuse comportant une première fréquence, f1, dans la TB, dans lequel B1 s'étend d'une première basse fréquence, f1_low, jusqu'à une première haute fréquence, f1_high,
   - l'allocation (120) d'un second canal, C2, comportant une seconde bande passante, B2, à une seconde sous-porteuse comportant une seconde fréquence, f2, dans la TB, dans lequel B2 s'étend d'une seconde basse fréquence, f2_low, jusqu'à une seconde haute fréquence, f2_high, et
   l'allocation respecte les conditions suivantes : B1=B2=B ; l'espacement de fréquence entre f1_high et f2_low est supérieur ou égal à la bande passante B des canaux; et 2*f1_low est supérieur ou égal à fN_high, dans lequel fN_high est une extrémité haute fréquence d'une bande passante pour une Nième sous-porteuse, le procédé étant **caractérisé en ce que**
   à chaque fois qu'un nombre de canaux doit être ajouté de sorte que le nombre total de canaux soit doublé, l'allocation de sous-porteuses aux canaux à ajouter conformément au schéma d'allocation pour les canaux existants, et l'allocation des canaux additionnels de sorte que l'espacement de fréquence entre les spectres de transmission des canaux existants et ajoutés soit supérieur ou égal à $B*3^k$, où k correspond au nombre de fois que le nombre de canaux a été doublé.

2. Dispositif d'allocation de sous-porteuse (300, 400) pour allouer N canaux à des sous-porteuses le long d'une bande passante totale, TB, dans lequel N est un nombre entier supérieur ou égal à 2, le dispositif d'allocation de sous-porteuse étant configuré pour :

   - allouer un premier canal, C1, comportant une première bande passante, B1, à une première sous-porteuse comportant une première fréquence, f1, dans la TB, dans lequel B1 s'étend d'une première basse fréquence, f1_low, jusqu'à une première haute fréquence, f1_high,
   - allouer un second canal, C2, comportant une seconde bande passante, B2, à une seconde sous-porteuse comportant une seconde fréquence, f2, dans la TB, dans lequel B2 s'étend d'une seconde basse fréquence, f2_low, jusqu'à une seconde haute fréquence, f2_high, et
   dans lequel l'allocation respecte les conditions suivantes : B1=B2=B, l'espacement de fréquence entre f1_high et f2_low est supérieur ou égal à la bande passante B des canaux, et 2*f1_low est supérieur ou égal à fN_high, dans lequel fN_high est une extrémité haute fréquence d'une bande passante pour une Nième sous-porteuse, dans lequel le dispositif d'allocation de sous-porteuse est **caractérisé en ce qu'**il est en outre configuré pour, à chaque fois qu'un nombre de canaux doit être ajouté de sorte que le nombre total de canaux soit doublé, allouer des sous-porteuses aux canaux à ajouter conformément au schéma d'allocation pour les canaux existants, et allouer les canaux additionnels de sorte que l'espacement de fréquence entre les spectres de transmission des canaux existants et ajoutés soit supérieur ou égal à $B*3^k$, où k correspond au nombre de fois que le nombre de canaux a été doublé.

3. Programme informatique (510), comprenant des moyens de code lisible par ordinateur mettant en oeuvre le procédé selon la revendication 1.

4. Produit de programme informatique (508) comprenant le programme informatique (510) selon la revendication 3.

100 ⟍ ⟋ 110

Allocating first channel, C1, having 1st bandwidth, B1, to first subcarrier having 1st frequency f1 within TB, B1 stretching from f1_low to f1_high

⟋ 120

Allocating second channel, C2, having 2nd bandwidth, B2, to second subcarrier having 2nd frequency f2 within TB, B2 stretching from f2_low to f2_high

⟋ 130

Allocating Nth channel, CN, having Nth bandwidth, BN, to Nth subcarrier having Nth frequency fN within TB, BN stretching from fN_low to fN_high, wherein B1=B2=BN and frequency spacing between f1_high and f2_low is equal to, or greater than, B, and 2*f1_low is equal to, or greater than, fN_high, N>=2

Fig. 1a

B          B                    B          B

B'   B'    B'   B'              B'   B'    B'   B'

-f2        -f1                  f1         f2

Fig. 1b

100 —

From 120

—121

Allocating third channel, C3, having 3rd bandwidth, B3, to third subcarrier having 3rd frequency f3 within TB, B3 stretching from f3_low to f3_high, wherein frequency distance between f2_high and f3_low is equal to or greater than three times the bandwidth B of channels

To 122 or 130

Fig. 1c

100 —

From 121

—122

Allocating fourth channel, C4, having 4th bandwidth, B4, to fourth subcarrier having 4th frequency f4 within TB, B4 stretching from f4_low to f4_high, wherein frequency distance between f3_high and f4_low is equal to or greater than the bandwidth B of channels

To 123 or 130

Fig. 1d

100 —

105

Pairing all channels into pairs: C1+C2=first pair,
C3+C4=second pair, C5+C6=third pair etc.

↓ To 121, 122

From 122          123

Allocating each channel to subcarrier having a frequency such that the frequency spacing
between the channels of each pair of channels is equal to or greater than B; such that the
frequency spacing between the first and the second pair of channels is equal to or greater
than 3B; such that the frequency spacing between the second and the third pair is equal to or
greater than 9B of the channels; and such that the frequency spacing between the third and
the fourth pair is equal to or greater than 3B

Fig. 1e

Amplitude

Fundamental
products

Subcarrier
having
frequency f

Channel

B=f_high-f_low

B

f_low          f_high

Frequency

Fig. 2a

Fig. 2b

Fig. 2c

Fig. 2d

330 Communication unit

320 Processing means

321 Processor

322 Memory

323 Computer program

Memory

310

200 Subcarrier allocation device

340 Further functionality

Fig. 3

400 Subcarrier allocation device

401 Communication unit

403 Allocation unit

Memory

402

404 Informing unit

409 Further functionality

Fig. 4

Fig. 5a

Fig. 5b

Fig. 5c

| A | B | C | D | E | F | G | H |
|---|---|---|---|---|---|---|---|
| | B [MHz] | | | | | | |
| | fmax[MHz | 40 | | | | | |
| | | | | | | | |
| | 0 | | 0 | 0 | 0 | 0 | 0 |
| | 60 | | 0 | 0 | 0 | 0 | 0 |
| | 120 | | 0 | 0 | 0 | 1 | 1 |
| | 180 | | 0 | 0 | 0 | 1 | 1 |
| | 240 | | 0 | 0 | 0 | 1 | 1 |
| | 300 | | 0 | 0 | 1 | 0 | 2 |
| | 360 | | 0 | 0 | 1 | 0 | 2 |
| | 420 | | 0 | 0 | 1 | 0 | 2 |
| | 480 | | 0 | 0 | 1 | 0 | 2 |
| | 540 | | 0 | 0 | 1 | 0 | 2 |
| | 600 | | 0 | 0 | 1 | 1 | 3 |
| | 660 | | 0 | 0 | 1 | 1 | 3 |
| | 720 | | 0 | 0 | 1 | 1 | 3 |
| | 780 | | 0 | 1 | 0 | 0 | 4 |
| | 840 | | 0 | 1 | 0 | 0 | 4 |
| | 900 | | 0 | 1 | 0 | 0 | 4 |
| | 960 | | 0 | 1 | 0 | 0 | 4 |

Fig. 6

Fig. 7

**EP 3 186 908 B1**

**REFERENCES CITED IN THE DESCRIPTION**

**Patent documents cited in the description**

- GB 2501159 A